## Europäisches Patentamt

## European Patent Office

## Office européen des brevets

(11) Veröffentlichungsnummer: **0 219 636**
**B1**

(12) **EUROPÄISCHE PATENTSCHRIFT**

(45) Veröffentlichungstag der Patentschrift:
**24.05.89**

(51) Int. Cl.⁴: **F 01 N 3/28**

(21) Anmeldenummer: **86111251.4**

(22) Anmeldetag: **14.08.86**

(54) Abgasreinigungsvorrichtung für Kraftfahrzeuge.

(30) Priorität: **06.09.85 DE 3531807**

(43) Veröffentlichungstag der Anmeldung:
**29.04.87 Patentblatt 87/18**

(45) Bekanntmachung des Hinweises auf die Patenterteilung:
**24.05.89 Patentblatt 89/21**

(84) Benannte Vertragsstaaten:
**FR GB IT**

(56) Entgegenhaltungen:
**DE-A- 2 364 425**
**FR-A- 2 215 533**
**US-A- 4 163 041**

(73) Patentinhaber: **Leistritz Aktiengesellschaft,
Markgrafenstrasse 29-39, D-8500 Nürnberg (DE)**

(72) Erfinder: **Brich, Jürgen, Schillstrasse 174d,
D-8900 Augsburg (DE)**
Erfinder: **Böhmer, Axel, Bismarckstrasse 21,
D-8500 Nürnberg (DE)**
Erfinder: **Passauer, Bernd, Bismarckstrasse 18,
D-8950 Kaufbeuren (DE)**

(74) Vertreter: **Patentanwälte Czowalla . Matschkur +
Partner,
Dr.-Kurt-Schumacher-Strasse 23 Postfach 9109,
D-8500 Nürnberg 11 (DE)**

**Beschreibung**

Die Erfindung bezieht sich auf eine Abgasreinigungsvorrichtung für Kraftfahrzeuge mit wenigstens einem in einem metallischen Außengehäuse mit stirnseitigen Abgaszu- und -abführstutzen angeordneten, wabenförmig strukturierten monolithischen Keramikkörper, wobei dem Außengehäuse und dem Keramikkörper eine thermisch isolierende Federlage aus Mineralfaser zwischengeordnet ist, wobei die Abgaszu- und -abführstutzen von einem hochtemperaturfesten Abschirmblech überdeckt sind, das jeweils in seiner axial äußeren Randzone mit dem anstehenden Bauteil (z.B. Abgaszu- und -abführstutzen, Anschlußrohrleitung) gasdicht befestigt ist, und das jeweils mit einem dem thermischen Ausdehnungsspiel über den Betriebstemperaturbereich entsprechenden Spalt frei vor den Stirnflächen des Keramikkörpers endet.

Bei einer derartigen Abgasreinigungsvorrichtung, wie sie in der DE-A-2 314 465 vorgeschlagen wurde, kann anstelle der hochtemperaturfesten Abschirmbleche, die zum Schutz der Abgaszu- und -abführstutzen vorgesehen sind, auch eine wärmeisolierende Auskleidung in diesem Bereich vorgesehen sein. Abgesehen davon, daß eine einfache wärmedämmende Auskleidung in Form einer Mineralfasermatte von den Abgasen allzu schnell beschädigt und ausgeblasen würde, so daß in jedem Fall auch eine solche wärmeisolierende Auskleidung nochmals von einem hochtemperaturfesten Abschirmblech überdeckt sein müßte, ergibt sich dabei die Schwierigkeit, daß die pulsierenden Abgase die eine Schnittkante darstellende Stoßkante zwischen den beiden Auskleidungen erreichen können, da diese Schnittkanten der beiden Matten im Bereich des Spaltes zwischen Abschirmblech und Keramikkörper liegen. Dies führt aber, wie umfangreiche der vorliegenden Erfindung zugrundeliegende Versuche gezeigt haben, bereits nach einer relativ kurzen Betriebszeit zu dem gefürchteten Ausblasen der Mineralfasermatten, insbesondere wenn man für die Lagerung der Keramikkörper die hierfür an sich besonders geeigneten sog. Quellmatten verwenden will, d.h. Matten auf Mineralfaserbasis, die sich bei Temperaturerhöhung sehr stark aufblähen, so daß auf diese Weise die starken thermischen Ausdehnungsunterschiede besonders günstig abgefangen werden können.

Um ein solches Ausblasen zu verhindern, sind bereits eine Vielzahl von Vorschlägen gemacht worden, die in den meisten Fällen darauf beruhen (man vergleiche hierzu beispielsweise die Deutsche Gebrauchsmusterschrift 80 19 813), daß zusätzliche Abdichtringe den Ringspalt zwischen dem Keramikkörper und dem Außengehäuse übergreifen und damit den pulsierenden Abgasen den Zutritt zu der in diesem Ringraum angeordneten Federmatte versperren. Diese Anordnung ist jedoch nicht nur sehr montageaufwendig, sondern verhindert auch eine durchgehende Isolierung des Außengehäuses beim zusätzlichen Vorsehen von Abschirmblechen für die Abgaszu- und -abführstutzen, was aber notwendig ist, damit man für das Außengehäuse problemlos einfachere, nicht so hochtemperaturfeste Materialien einsetzen kann.

Zwar ist in der DE-A-2 324 866 bereits eine Abgasreinigungsvorrichtung vorgeschlagen worden, bei welcher eine derartige durchgehende Isolierung des Außengehäuses gegeben ist. Abgesehen davon, daß es sich bei der dort verwendeten elastischen Wärmedämmschicht um keine Mineralfasermatte und schon gar nicht um eine Quellmatte handeln kann, besteht bei dieser Anordnung das Problem des Schützens der Stirnenden der Federlage überhaupt nicht, weil die Abschirmbleche spaltfrei und unter Druck am Keramikkörper die Halterung des Keramikkörpers bildend, anliegen. Ein derartiges Anliegen des Abschirmblechs für die Abgaszu- und -abführstutzen soll ja zur Vermeidung einer Beschädigung des Keramikkörpers bei den der vorliegenden Erfindung zugrundeliegenden bekannten Abgasreinigungsvorrichtungen der gattungsgemäßen Art vermieden werden. Im übrigen zeigt die Fig. 2 der genannten DE-A-2 324 866 auch im Bereich der Querfuge (Schweißnaht 25) keine Trennfuge für die Wärmedämmschicht, obwohl sie dort aus Montagegründen unerläßlich wäre.

Der Erfindung liegt daher die Aufgabe zugrunde, eine Abgasreinigungsvorrichtung der eingangs genannten Art so auszugestalten, daß bei einfachem Aufbau die Gefahr eines Ausblasens der Federmatte durch die pulsierenden Abgase ausgeschlossen ist.

Zur Lösung dieser Aufgabe ist erfindungsgemäß vorgesehen, daß die als Quellmatte ausgebildete Federlage über den Spalt in den Ringraum zwischen Abgaszu- und -abführstutzen und jeweils zugehörigem Abschirmblech weit hineinreicht derart, daß ihre Stirnenden in Bereiche verlagert sind, in denen ein Kontakt mit den Abgasen nicht mehr stattfinden kann.

Durch die Verlagerung der Schnittkante der Quellmatte, an der diese durch Abgase besonders leicht aufgefasert und ausgeblasen werden kann, in einen Bereich der Trichterabschirmung, der von den Abgasen nicht erreicht werden kann, läßt sich in sehr einfacher Weise und ohne die komplizierten zusätzlichen Abdichtungen, wie sie im Stand der Technik hierfür bereits vorgesehen waren, die Gefahr eines Ausblasens der Quellmatte vermeiden. Die bereits sowieso reduzierten Abgaspulsationen, die durch den Spalt zwischen dem Abschirmblech und dem Keramikkörper noch an die Quellmatte gelangen können, können an der dichteren festeren Außenseite einer Quellmatte keine Zerstörungen mehr anrichten, im Gegensatz zu der nach wie vor gegebenen Zerstörungsgefahr von Quellmatten, wenn sie an dieser Stelle ihre Schnittkante hätten.

Zwar ist auch aus der DE-A-2 213 539 bereits eine Abgasreinigungsvorrichtung bekannt gewesen, bei der die Mineralfaser-Federeinlage sich etwas in den Trichterbereich hineinerstreckt. Dieses Hineinreichen — abgesehen von der fehlenden Überdeckung durch ein Abschirmblech für den Abgaszu- und -abführstutzen — hat nichts mit der erfindungsgemäßen Lösung, d.h. der Verhinderung eines Ausblasens der Mineralfasermatte, zu tun. Dieses Hineinreichen bei der genannten Offenlegungsschrift hat nur den Zweck, die axiale Lagerung des Keramikkörpers zu bilden.

In Weiterbildung der Erfindung kann zusätzlich noch vorgesehen sein, daß die Stirnkanten der Abschirmbleche einige Millimeter nach innen abgekantet sind, wodurch der Abgasstrom im Wandungsbereich etwas umgelenkt wird und somit ein direktes Anströmen der Matte in diesem schmalen Spalt überhaupt nicht mehr stattfindet. Durch dieses Nach-innen-Abkanten der Abschirmbleche wird im übrigen die Eingangsstirnfläche der Keramikkörper nicht eingeengt, jedenfalls solange die Abkantung die Wandstärke der Außenwand des Keramikkörpers nicht wesentlich übersteigt. Dieses Abkanten der Stirnkanten der Abschirmbleche ist im übrigen auch vorteilhaft bei Vorsehen eines direktes Anliegens der Abschirmbleche zwischen den monolithischen Keramikkörpern an deren Stirnflächen, da auf diese Art und Weise die bei den thermischen Dehnungen auftretenden Druckbeaufschlagungen der Stirnflächen nicht zu einem Zerbrechen der Keramikkörper führen können.

Schließlich hat es sich auch noch als besonders zweckmässig — und darüber hinaus auch noch besonders montagefreundlich — erwiesen, wenn die Mineralfasermatte sich durchgehend einstückig vom Abgaszu- zum Abgasabführstutzen erstreckt, d.h. einstückig auch über den Bereich zwischen zwei oder mehreren beabstandeten Keramikkörpern durchgezogen ist.

Die Erfindung soll nachstehend an zwei Ausführungsbeispielen sowie anhand der Zeichnung näher erläutert werden.

Dabei zeigen:

Fig. 1 einen schematischen Längsschnitt durch eine erfindungsgemäße Abgasreinigungsvorrichtung und

Fig. 2 einen Teillängsschnitt durch eine geänderte Ausführungsform.

In dem im wesentlichen zylinderförmigen Außengehäuse 1, an welches konisch sich verjüngende Abgaszu- und Abgasabführstutzen 2a und 2b sich anschließen, sind monolithische, wabenartig strukturierte Keramikkörper 3 gehaltert, deren Oberfläche ggf. mit einer katalytisch wirksamen Oberflächenbeschichtung versehen ist. Zur Halterung dieser Keramikkörper sind sogenannte Quellmatten vorgesehen, d.h. mit steigender Temperatur expandierende feuerfeste Mineralfasermatten 4, die für eine zentrierte Halterung im Außengehäuse auch unter Berücksichtigung der stark unterschiedlichen Ausdehnung im Betrieb der Abgasreinigungsvorrichtung sorgen.

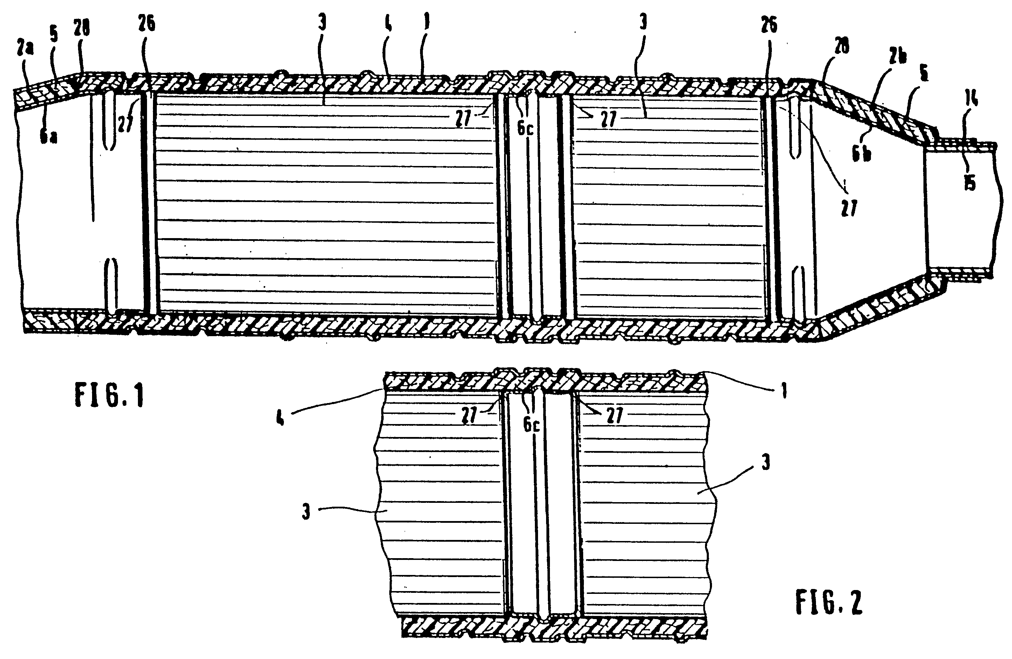

Um für das Außengehäuse 1 und die anschließenden Abgaszu- und Abgasabführstutzen 2a, 2b billigere einfache Stahlbleche verwenden zu können, ist zunächst vorgesehen, daß die Innenflächen der Abgaszu- und Abgasabführstutzen 2 mit thermisch isolierenden Matten 5 abgedeckt sind, die ihrerseits von einem hochtemperaturfesten Abschirmblech 6a und 6b überdeckt werden. Ein entsprechendes Abschirmblech 6c ist im Übergangsbereich zwischen den beiden hintereinanderliegenden Keramikkörpern 3 vorgesehen, um auch in diesem Bereich die Mineralfasermatte 4 vor dem pulsierenden Abgasstrom zu schützen. Die Abschirmbleche 6a, 6b sind in ihrer äußeren Randzone 14 mit dem Außengehäuse 1 und ggf. mit einem Befestigungsflansch, oder im dargestellten Ausführungsbeispiel einem anschließenden Abgasrohrabschnitt 15 verschweißt. Am inneren Ende, d.h. an dem der Stirnfläche eines Keramikkörpers 3 zugewandten Ende, enden die Abschirmbleche 6a, 6b und 6c beim Ausführungsbeispiel nach Fig. 1 in einem dem relativen thermischen Ausdehnungsspiel über den Betriebstemperaturbereich entsprechenden Abstand, der je nach Länge des Eingangstrichters etwa 1 bis 3,5 mm betragen kann, frei vor den Stirnflächen der Keramikkörper 3. Gleichzeitig ragt die Mineralfasermatte 4, die sich durchgehend vom Abgaszuführstutzen 2a bis zum Abgasabführstutzen 2b erstreckt, über den geringen Spalt 26 in den Trichterbereich hinein, so daß gerade die gegen Ausblasen empfindlichen Stirnabschnitte 28 absolut sicher gegen ein Anströmen durch die pulsierenden Abgase geschützt sind.

Im dargestellten Ausführungsbeispiel sind die Abschirmbleche 6a, 6b und 6c, deren Durchmesser im wesentlichen dem Durchmesser der Keramikkörper 3 entspricht, an ihren freien Kanten 27 wenige Millimeter, insbesondere nur entsprechend der Wandstärke des Außenmantels der Keramikkörper 3 nach innen abgekantet, wodurch die Gefahr eines Anblasens der Mineralfasermatte 4 in dem geringen Spalt 26 noch weiter reduziert ist.

Durch den erfindungsgemäßen Aufbau ergibt sich eine durchgehende thermische Isolierung nach außen, bei der sich die Innentrichter und der Zwischenabschirmzylinder 6c frei an den Enden ausdehnen können. Das Außengehäuse ist durchgehend nach innen hin isoliert, ohne daß an irgendeiner Stelle eine störende Wärmebrücke auftritt. Der Aufbau ohne besondere Dichtringe, Dichtfolien oder sonstige Maßnahmen ergibt eine wesentlich vereinfachte Montage des Katalysators. Schließlich ist eine optimale Ausnutzbarkeit der Keramikkörper gegeben, da sie über ihren gesamten nutzbaren Querschnitt angeströmt und durchströmt werden können.

In Fig. 2 ist in einem Teilschnitt eine Ausführungsform dargestellt, bei der das Abschirmblech 6c zwischen den monolithischen Keramikkörpern 3 ohne Spiel direkt an den Stirnflächen der Keramikkörper anliegt. Die relativ geringen Ausdehnungsunterschiede, die aufgrund der Kürze dieser Abschirmbleche 6c auftreten können, lassen sich entweder durch eine entsprechende Durchbiegung oder aber dadurch abfangen, daß die Keramikkörper um das entsprechende Mass — begünstigt durch die Abkantungen 27 — nach außen geschoben werden, so daß die Dehnungstoleranz in einem innerhalb der Spalte 26 abgefangen wird.

**Patentansprüche**

1. Abgasreinigungsvorrichtung für Kraftfahrzeuge mit wenigstens einem in einem metallischen Außengehäuse (1) mit stirnseitigen Abgaszu- und -abführstutzen (2a, 2b) angeordneten, wabenförmig strukturierten monolithischen Keramikkörper (3), wobei dem Außengehäuse (1) und dem Keramikkörper (3) eine thermisch isolierende Federlage (4) aus Mineralfaser zwischengeordnet ist, wobei die Abgaszu- und -abführstutzen (2a, 2b) von einem hochtemperaturfesten Abschirmblech (6a, 6b) überdeckt sind, das jeweils in seiner axial äußeren Randzone mit dem anstehenden Bauteil (z.B. Abgaszu- und -abführstutzen, Anschlußrohrleitung) gasdicht befestigt ist, und das jeweils mit einem dem thermischen Ausdehnungsspiel über den Betriebstemperaturbereich entsprechenden Spalt frei vor den Stirnflächen des Keramikkörpers (3) endet, dadurch gekennzeichnet, daß die als Quellmatte (6) ausgebildete Federlage über den Spalt (26) in den Ringraum zwischen Abgaszu- und -abführstutzen und jeweils zugehörigem Abschirmblech weit hineinreicht derart, daß ihre Stirnenden in Bereiche verlagert sind, in denen ein Kontakt mit den Abgasen nicht mehr stattfinden kann.

2. Abgasreinigungsvorrichtung nach Anspruch 1, dadurch gekennzeichnet, daß die Stirnkanten (27) der Abschirmbleche (6a, 6b) einige Millimeter nach innen abgekantet sind.

3. Abgasreinigungsvorrichtung nach Anspruch 1 oder 2, dadurch gekennzeichnet, daß die Quellmatte (6) sich durchgehend einstückig vom Abgaszuführstutzen (2a) zum -abführstutzen (2b) erstreckt.

## Claims

1. A device for de-toxifying exhaust gas for motor vehicles, having at least one monolithic ceramic body (3) with a honeycomb structure disposed in a metal outer housing (1) with exhaust gas inlet and outlet nozzles (2a, 2b) disposed on the end faces, a thermally insulating resilient layer (4) made of mineral fibre being interposed between the outer housing (1) and the ceramic body (3), the exhaust gas inlet and outlet nozzles (2a, 2b) being covered with a high-temperature-resistant screening plate (6a, 6b), which is in each case secured in a gas-tight manner in its axially exterior edge region to the contiguous component (e.g. exhaust gas inlet and outlet nozzles, connecting pipe duct), and which in each case ends freely in front of the end faces of the ceramic body (3) with a gap corresponding to the thermal expansion play over the operating temperature range, characterised in that the resilient layer formed as a swelling matting (6) extends far above the gap (26) into the annular space between the exhaust gas inlet and outlet nozzles and the associated screening plate in each case, in such a manner that its front ends are displaced into regions where contact with the exhaust gases can no longer take place.

2. A device for de-toxifying exhaust gas according to claim 1, characterised in that the end edges (27) of the screening plates (6a, 6b) are bent inwards by a few millimetres.

3. A device for de-toxifying exhaust gas according to claim 1 or 2, characterised in that the swelling matting (6) extends continuously as one piece from the exhaust gas inlet nozzle (2a) to the exhaust gas outlet nozzle (2b).

## Revendications

1. Dispositif d'épuration des gaz d'échappement pour des véhicules automobiles comportant au moins un corps céramique monolithique (3) structuré en forme de nid d'abeilles et disposé dans un boîtier extérieur métallique (1) comportant des tubulures frontales (2a, 2b) d'amenée et d'évacuation des gaz d'échappement, et dans lequel une couche élastique (4) isolante du point de vue thermique et formée par des fibres minérales et est intercalée entre le boîtier extérieur (1) et le corps céramique (3), les tubulures (2a, 2b) d'amenée et d'évacuation des gaz d'échappement sont recouvertes par une tôle de blindage (6a, 6b) résistant aux températures élevées, qui est fixée d'une manière étanche aux gaz, respectivement dans sa zone marginale extérieure du point de vue axial, au composant fixe (par exemple les tubulures d'amenée et d'évacuation des gaz d'échappement, une conduite tubulaire de raccordement) et se termine dans une position dégagée en avant des faces frontales du corps céramique (3), en formant respectivement une fente correspondant au jeu de dilatation thermique intervenant dans la plage des températures de fonctionnement, caractérisé en ce que la couche élastique réalisée sous la forme d'un mat gonflant (6) s'étend au-delà de la fente (26) en pénétrant largement dans l'espace annulaire présent entre les tubulures d'amenée et d'évacuation des gaz d'échappement et la tôle respective associée de blindage de telle sorte que les faces frontales de cette couche élastique sont disposées dans des zones, dans lesquelles un contact avec les gaz d'échappement ne peut plus avoir lieu.

2. Dispositif d'épuration des gaz d'échappement selon la revendication 1, caractérisé en ce que les bords frontaux (27) des tôles de blindage (6a, 6b) sont rabattus vers l'intérieur sur quelques millimètres.

5. Dispositif d'épuration des gaz d'échappement selon la revendication 1 ou 2, caractérisé en ce que le mat gonflant (6) s'étend sous forme continue d'un seul tenant depuis la tubulure (2a) d'amenée des gaz d'échappement jusqu'à la tubulure (2b) d'évacuation des gaz d'échappement.

FIG. 1

FIG. 2

EP 0 219 636 B1